# FASCICULE DE BREVET EUROPEEN

(11) **EP 3 114 014 B1**
(45) Date de publication et mention de la délivrance du brevet: **10.01.2018**
(21) Numéro de dépôt: 15709225.5
(22) Date de dépôt: 06.02.2015
(51) Int. Cl.: B62D 27/06

(54) **SYSTÈME DE FIXATION DE PLUSIEURS ÉLÉMENTS DE CARROSSERIE**
SYSTEM ZUR BEFESTIGUNG EINER VIELZAHL VON KAROSSERIEELEMENTEN
SYSTEM FOR FASTENING A PLURALITY OF BODYWORK ELEMENTS

(30) Priorité: 06.03.2014 FR 1451818
(43) Date de publication de la demande: 11.01.2017
(73) Titulaire: PSA Automobiles SA, 78300 Poissy (FR)
(72) Inventeur: VERSTRAETE, Etienne, F-78220 Viroflay (FR); LEFEVRE, Eric, F-91470 Limours (FR)
(74) Mandataire: Fosse, Danièle
(86) Numéro de dépôt international: PCT/FR2015/050295
(87) Numéro de publication internationale: WO 2015/132490

(56) Documents cités:
- EP-A1- 1 798 135
- EP-A1- 2 062 804
- EP-A1- 2 116 446
- JP-A- S58 136 571
- JP-A- S58 218 477
- US-B2- 8 083 285

## Description

L'invention a trait au domaine de l'automobile et plus particulièrement aux dispositifs de fixation des éléments de carrosserie sur la caisse d'un véhicule automobile.

La caisse du véhicule automobile représente l'ossature de ce dernier. Cette caisse est pourvue de toute une série de pièces d'habillage aussi appelées éléments de carrosserie. Les pièces d'habillage contribuent à l'aérodynamique du véhicule ainsi qu'à l'esthétique en promouvant le style d'une marque automobile. A l'avant du véhicule, de chaque côté notamment, trois éléments de carrosserie sont montés sur la caisse. Ces trois éléments sont le pare-boue, l'enjoliveur bas de caisse et l'aile avant.

Le pare-boue est une pièce généralement fabriquée dans un matériau semi-rigide. Celui-ci présente une forme semi-circulaire surplombant la roue avant afin d'éviter que des projectiles (gravillons, boue) lancés à grande vitesse n'abîment le véhicule automobile.

L'enjoliveur bas de caisse est une pièce d'habillage qui s'étend entre les roues avant et arrière. L'enjoliveur offre au véhicule un aspect esthétique agréable. Il contribue également à l'aérodynamique du véhicule.

A l'instar de l'enjoliveur bas de caisse, l'aile avant confère esthétique et aérodynamique au véhicule automobile.

Le brevet américain n° 8,083,285 décrit la fixation du pare-boue et de l'enjoliveur bas de caisse directement sur la caisse du véhicule automobile à l'aide d'une vis. Le pare-boue est pris en sandwich entre l'extrémité avant de l'enjoliveur bas de caisse et la caisse du véhicule automobile. Une vis est alors insérée dans un orifice pratiqué à la fois dans l'enjoliveur bas de caisse, le pare-boue et la caisse du véhicule automobile.

Ce type de fixation présente de nombreux inconvénients. Un premier d'entre eux est qu'il est nécessaire de positionner le perçage de l'enjoliveur bas de caisse et du pare-boue en regard du perçage pratiqué dans la caisse du véhicule automobile. Une vis est ensuite insérée, celle-ci permettant de fixer l'enjoliveur et le pare-boue sur la caisse du véhicule automobile.

Un deuxième inconvénient est que l'aile est fixée en un autre endroit sur la caisse du véhicule automobile. Cette configuration génère des espaces entre les éléments d'habillage qui ne sont pas constants compte tenu des intervalles de tolérance d'un véhicule à l'autre. Autrement dit, l'aspect général du véhicule automobile présente des défauts visibles d'un véhicule à un autre et ce, sur une même chaîne de montage.

Plusieurs objectifs sont poursuivis parmi lesquels peuvent être cités :
- rendre aisée la fixation des éléments d'habillage sur la caisse de véhicule automobile,
- fixer au moins trois pièces d'habillage sur un seul système de fixation,
- éviter les défauts esthétiques liés au fait que les pièces d'habillage ne sont pas fixées au même endroit sur la caisse de véhicule automobile.

A cet effet, il est proposé en premier lieu un système de fixation d'éléments de carrosserie sur une caisse de véhicule automobile, ce système de fixation comprenant une interface se présentant sous la forme d'une pièce monobloc et solidaire de la caisse de véhicule automobile, cette interface comprenant :
- une première partie comprenant des moyens de fixation destinés à recevoir un enjoliveur bas de caisse ;
- une deuxième partie comprenant des moyens de fixation destinés à recevoir un pare-boue ;
- une troisième partie comprenant des moyens de fixation destinés à recevoir une aile avant.

La fixation des éléments de carrosserie sur la caisse de véhicule automobile est d'autant plus aisée que celle-ci s'effectue sur une seule et même interface. Ceci évite également les défauts d'aspects d'un véhicule à l'autre.

Diverses caractéristiques supplémentaires peuvent être prévues, seules ou en combinaison :
- la première partie, la deuxième partie et la troisième partie s'étendent chacune dans des plans sensiblement perpendiculaires deux à deux ;
- la première partie comprend une première platine et une deuxième platine, ces dernières étant espacées l'une de l'autre par une chicane ;
- la deuxième partie et la section de liaison présentent à leur jonction un premier virage sur lequel sont formés deux bulldozers par poinçonnage de la matière ;
- la deuxième partie comprend une troisième platine, la deuxième partie et la première partie étant reliées par l'intermédiaire d'une section de liaison faisant face à la deuxième platine, la section de liaison et la première partie présentant à leur jonction un bourrelet formé par pliage de la matière ;
- la troisième partie s'étend en porte-à-faux au-dessus de la première partie avec laquelle elle est reliée par l'intermédiaire d'une jonction courbe ;
- la troisième partie comprend une quatrième platine et une cinquième platine s'étendant respectivement en porte-à-faux au-dessus de la première platine et de la deuxième platine ;
- l'interface comprend une patte de fixation reliée à la deuxième partie par l'intermédiaire d'une section de jonction, la section de jonction étant connectée à l'une de ses extrémités avec la deuxième partie par l'intermédiaire d'une première courbure et à l'autre de ses extrémités avec la patte de fixation par l'intermédiaire d'une seconde courbure ;
- sont respectivement agencés sur la première platine, la deuxième platine, la troisième platine, la cinquième platine, un orifice, un trou, une échancrure et un perçage destinés à recevoir des agrafes ou des vis ;
- la quatrième platine et la cinquième platine sont espacées l'une de l'autre par l'intermédiaire d'une section courbe, la section courbe s'étendant en porte-à-faux sur toute la longueur de la chicane ;
- la section de liaison et la deuxième platine sont maintenues en contact intime grâce à un clinche formé par emboutissage de la matière du côté de la section de liaison.

Il est proposé en second lieu un véhicule automobile comprenant un système de fixation tel que précédemment décrit.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective d'un véhicule automobile équipé d'un système de fixation de plusieurs éléments de carrosserie ;
- la figure 2 est une vue en perspective de l'interface du système de fixation ;
- la figure 3 est une vue en perspective de l'interface du système de fixation selon un autre angle de vue ;
- la figure 4 est une vue schématique du système de fixation sur lequel sont montés plusieurs éléments de carrosserie ;

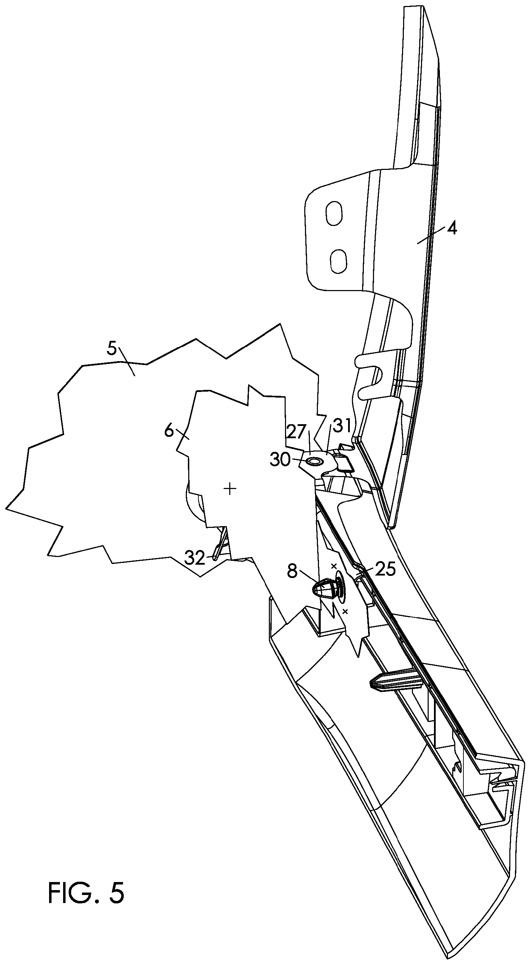

- la figure 5 est une vue schématique du système de fixation sur lequel sont montés plusieurs éléments de carrosserie selon un autre angle de vue.

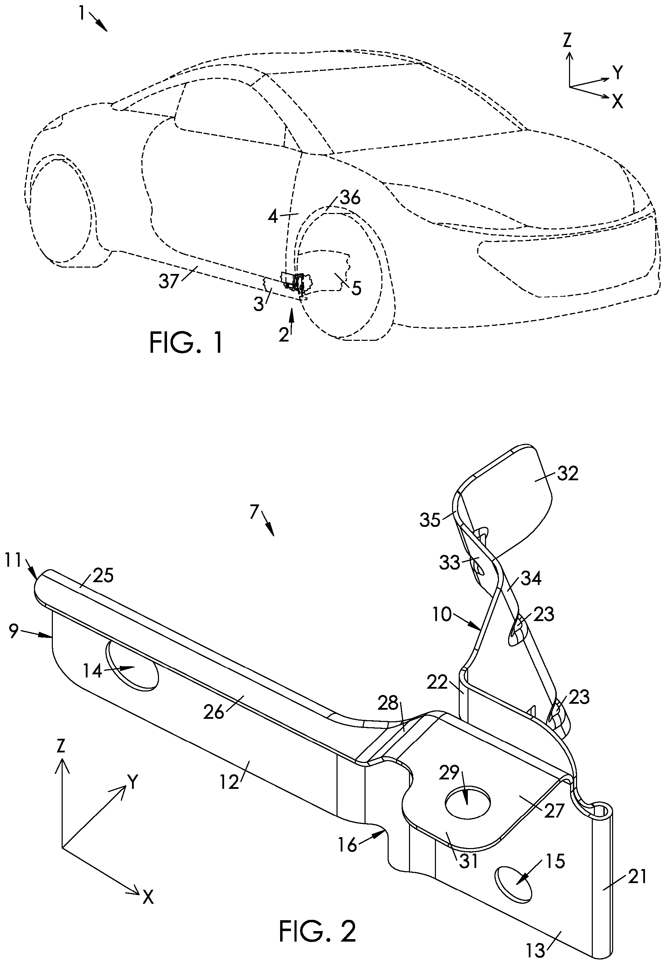

La figure 1 représente un véhicule **1** automobile équipé d'un système **2** de fixation de plusieurs éléments **3, 4, 5** de carrosserie sur une caisse **6** de véhicule automobile.

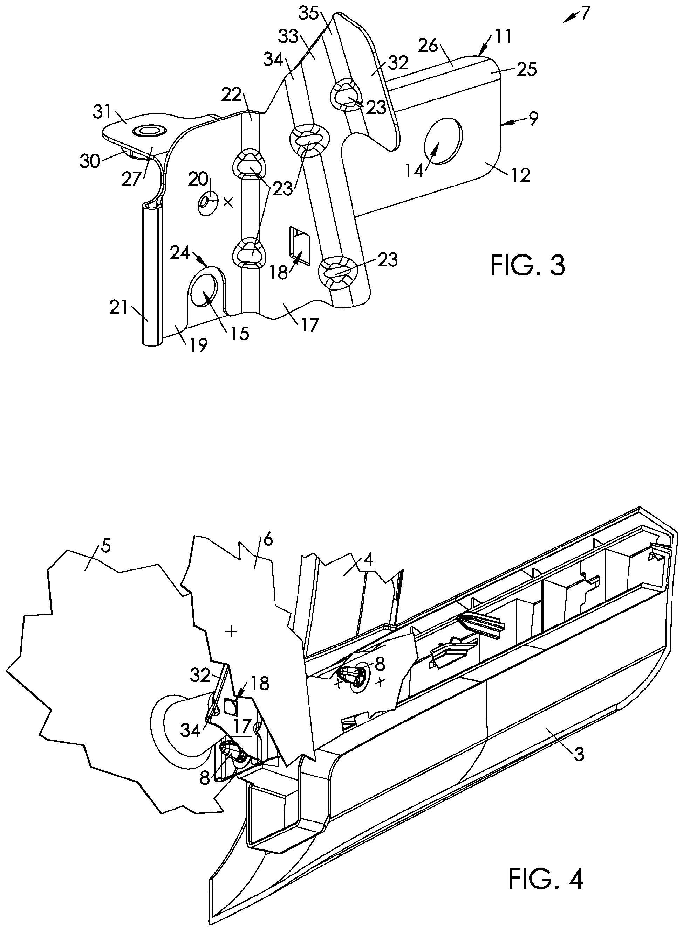

Le système **2** de fixation comprend une interface **7** représentée en détails sur les figures 2 et 3 et des moyens de fixation rapportés telles que des agrafes **8** et vis.

L'interface **7** comprend :
- une première partie **9,**
- une deuxième partie **10,** et
- une troisième partie **11.**

Chaque partie s'étend dans un plan, ces plans étant sensiblement perpendiculaires deux à deux.

On définit par rapport au véhicule **1** un repère orthogonal XYZ comprenant trois axes perpendiculaires deux à deux, à savoir :
- un axe X, définissant une direction longitudinale, horizontale, confondue avec la direction générale de déplacement du véhicule,
- un axe Y, définissant une direction transversale, horizontale, qui avec l'axe X définit un plan XY horizontal,
- un axe Z, définissant une direction verticale, perpendiculaire au plan XY horizontal et définissant les plans XZ et YZ.

La première partie **9** s'étend dans le plan XZ, celle-ci comprend une première platine **12** et une deuxième platine **13** sur lesquelles sont respectivement agencés un orifice **14** et un trou **15.** La première platine **12** et la deuxième platine **13** sont espacées l'une de l'autre par une chicane **16.**

La deuxième partie **10** comprend une troisième platine **17,** sur laquelle est percée une échancrure **18** de forme sensiblement carrée.

La deuxième partie **10** est reliée à la première partie **9** par une section **19** de liaison. La section **19** de liaison fait face à la deuxième platine **13** de la première partie **9.** La deuxième platine **13** et la section **19** de liaison sont maintenues en contact intime grâce à un clinche **20** et à un point de soudure électrique représenté sur les figures par une croix (PSE). Le clinche **20** est formé par emboutissage de la matière du côté de la section **19** de liaison.

La section **19** de liaison prolonge la première partie **9** à l'une de ses extrémités par un bourrelet **21** de matière formé par pliage à 180° de l'interface **7.** A l'autre extrémité, la jonction avec la deuxième partie **10** est faite grâce à un premier virage **22.** Deux bulldozers **23** permettent de figer l'angle entre la deuxième partie **10** et la section **19** de liaison. Les bulldozers **23** sont formés par poinçonnage de la matière afin de conférer à cette dernière de la rigidité structurelle. La section **19** de liaison comprend en outre une ouverture **24** afin de laisser libre le passage d'une agrafe **8** au travers du trou **15.**

La troisième partie **11** s'étend dans le plan XY en porte-à-faux au-dessus de la première partie **9,** avec laquelle elle est reliée par l'intermédiaire d'une jonction **25** courbe. La troisième partie **11** présente une quatrième platine **26** et une cinquième platine **27.** La quatrième platine **26** et la cinquième platine **27** s'étendent respectivement en porte-à-faux au-dessus de la première platine **12** et la deuxième platine **13.** La quatrième platine **26** et la cinquième platine **27** sont reliées par une section **28** courbe qui s'étend sur la longueur de la chicane **16** de telle sorte que la cinquième platine **27** se trouve surélevée par rapport à la quatrième platine **26.** La cinquième platine **27** comprend un perçage **29** sur lequel est fixé un écrou **30.** L'écrou **30** peut ainsi recevoir une vis pour fixer un élément de carrosserie. La cinquième platine **27** comprend à une extrémité distale une zone **31** faisant saillie par rapport à la quatrième platine **26.** Cette géométrie spécifique permet de s'adapter aux particularismes que présentent les modèles des différents véhicules automobiles.

L'interface **7** comprend enfin une patte **32** de fixation reliée à la deuxième partie **10** par l'intermédiaire d'une section **33** de jonction. La section **33** de jonction est connectée à une de ses extrémités avec la deuxième partie **10** par l'intermédiaire d'une première courbure **34** sur laquelle sont agencés deux bulldozers **23.** A l'autre de ses extrémités, la connexion avec la patte **32** de fixation se fait grâce une seconde courbure **35** sur laquelle est également agencé un bulldozer **23.**

L'interface **7** est positionnée au niveau du passage **36** de roue, sur l'extrémité avant du bas **37** de caisse. La patte **32** de fixation et la première platine **12** sont toutes deux mis en contact avec la caisse **6** du véhicule automobile en s'assurant que l'orifice **14** est indexé sur un trou d'indexage pratiqué dans la caisse **6** du véhicule automobile. Le reste de l'interface **7** est en porte-à-faux. L'interface **7** est alors fixée sur la caisse **6** du véhicule automobile à l'aide de plusieurs PSE. Dans un mode de réalisation, deux PSE sont réalisés au niveau de la première platine **12** de part et d'autre de l'orifice **14** et un autre PSE est pratiqué au niveau de la patte **32** de fixation.

Le montage des éléments **3, 4, 5,** de carrosserie peut alors débuter. L'ordre de montage des éléments **3, 4, 5** de carrosserie n'a pas d'importance, si bien que l'on peut commencer par n'importe quel élément.

Un premier élément, en l'occurrence un enjoliveur **3** bas de caisse est rapporté sur l'interface **7.** Deux agrafes **8** ont préalablement été pré positionnées sur l'enjoliveur **3** bas de caisse. L'enjoliveur **3** bas de caisse est encliqueté sur la première partie **9** de l'interface **7** comme illustré sur la figure 4.

Un deuxième élément de carrosserie, en l'occurrence le pare-boue **5** est rapporté sur l'interface **7.** Une cheville (non représentée) montée dans le pare-boue est mise en regard de l'échancrure **18** pratiquée dans la deuxième partie **10** et une vis (non représentée) permet de le solidariser à l'interface **7.**

Un troisième élément de carrosserie, à savoir l'aile **4** est rapportée sur l'interface **7.** Une vis (non représentée) est insérée dans l'écrou **30** et l'aile **4** est fixée à la troisième partie **11.**

Le système de fixation à interface **7** présente plusieurs avantages. Un premier avantage est que la fixation est aisée du fait que plusieurs éléments **3, 4, 5** de carrosserie sont fixés sur une seule et même pièce.

Un deuxième avantage est que l'aspect de la carrosserie est sensiblement identique d'un véhicule à l'autre, la fixation sur une seule et même pièce permettant d'éviter les erreurs de cotes liées aux défauts de fabrication.

Un troisième avantage procuré est que, compte tenu du fait que l'interface est en partie en porte-à-faux, ceci évite à l'enjoliveur bas de caisse d'être lui en porte-à-faux au-delà de la fixation de manière trop importante. Ceci réduit les risques de détérioration de l'enjoliveur **3** bas de caisse.

## Revendications

1. Système **(2)** de fixation d'éléments **(3, 4, 5)** de carrosserie sur une caisse **(6)** de véhicule automobile, ce système **(2)** de fixation comprenant une interface **(7)** se présentant sous la forme d'une pièce monobloc et solidaire de la caisse **(6)** de véhicule automobile, **caractérisé en ce que** cette interface **(7)** comprend :
- une première partie **(9)** comprenant des moyens de fixation destinés à recevoir un enjoliveur **(3)** bas de caisse ;
- une deuxième partie **(10)** comprenant des moyens de fixation destinés à recevoir un pare-boue **(5) ;**
- une troisième partie **(11)** comprenant des moyens de fixation destinés à recevoir une aile **(4)** avant.

2. Système **(2)** de fixation selon la revendication 1 **caractérisé en ce que** la première partie **(9),** la deuxième partie **(10)** et la troisième partie **(11)** s'étendent chacune dans des plans sensiblement perpendiculaires deux à deux.

3. Système **(2)** de fixation selon l'une quelconque des revendications précédentes **caractérisé en ce que** la première partie **(9)** comprend une première platine **(12)** et une deuxième platine **(13),** ces dernières étant espacées l'une de l'autre par une chicane **(16).**

4. Système **(2)** de fixation selon la revendication 3, **caractérisé en ce que** la deuxième partie **(10)** comprend une troisième platine **(17),** la deuxième partie **(10)** et la première partie **(9)** étant reliées par l'intermédiaire d'une section **(19)** de liaison faisant face à la deuxième platine **(13),** la section **(19)** de liaison et la première partie **(9)** présentant à leur jonction un bourrelet **(21)** formé par pliage de la matière.

5. Système **(2)** de fixation selon la revendication 4 **caractérisé en ce que** la deuxième partie **(10)** et la section **(19)** de liaison présentent à leur jonction un premier virage **(22)** sur lequel sont formés deux bulldozers **(23)** par poinçonnage de la matière.

6. Système **(2)** de fixation selon l'une quelconque des revendications précédentes **caractérisé en ce que** la troisième partie **(11)** s'étend en porte-à-faux au-dessus de la première partie **(9)** avec laquelle elle est reliée par l'intermédiaire d'une jonction **(25)** courbe.

7. Système **(2)** de fixation selon l'une quelconque des revendications 3 à 6 **caractérisé en ce que** la troisième partie **(11)** comprend une quatrième platine **(26)** et une cinquième platine **(27)** s'étendant respectivement en porte-à-faux au-dessus de la première platine **(12)** et de la deuxième platine **(13).**

8. Système **(2)** de fixation selon l'une quelconque des revendications précédentes **caractérisé en ce que** l'interface **(7)** comprend une patte **(32)** de fixation reliée à la deuxième partie **(10)** par l'intermédiaire d'une section **(33)** de jonction, la section **(33)** de jonction étant connectée à l'une de ses extrémités avec la deuxième partie **(10)** par l'intermédiaire d'une première courbure **(34)** et à l'autre de ses extrémités avec la patte **(32)** de fixation par l'intermédiaire d'une seconde courbure **(35).**

9. Système **(2)** de fixation selon l'une quelconque des revendications 7 à 8 **caractérisé en ce que** la quatrième platine **(26)** et la cinquième platine **(27)** sont espacées l'une de l'autre par l'intermédiaire d'une section courbe **(28),** la section courbe **(28)** s'étendant en porte-à-faux sur toute la longueur de la chicane **(16).**

10. Véhicule **(1)** automobile comprenant un système **(2)** de fixation selon l'une quelconque des revendications précédentes.

## Patentansprüche

1. System (2) zur Befestigung von Karosserieelementen (3, 4, 5) auf einem Kraftfahrzeugaufbau (6), wobei dieses Befestigungssystem (2) eine Schnittfläche (7) umfasst, die die Form eines einstückigen Teils hat und fest mit dem Kraftfahrzeugaufbau (6) verbunden ist, **dadurch gekennzeichnet, dass** diese Schnittfläche (7) Folgendes umfasst:
- einen ersten Teil (9), der Befestigungsmittel umfasst, die dazu bestimmt sind, eine Aufbauunterseiten-Zierleiste (3) zu erhalten;
- einen zweiten Teil (10), der Befestigungsmittel umfasst, die dazu bestimmt sind, einen Kotflügel (5) auf zunehmen;
- einen dritten Teil (11), der Befestigungsmittel umfasst, die dazu bestimmt sind, einen vorderen Flügel (4) aufzunehmen.

2. Befestigungssystem nach Anspruch 1, **dadurch gekennzeichnet, dass** sich der erste Teil (9), der zweite Teil (10) und der dritte Teil (11) jeweils in Ebenen, die zu je zwei im Wesentlichen zueinander senkrecht sind, erstrecken.

3. Befestigungssystem (2) nach einem der vorhergehenden Ansprüche, **dadurch gekennzeichnet, dass** der erste Teil (9) eine erste Platte (12) und eine zweite Platte (13) umfasst, wobei diese Letzteren voneinander durch eine Stauplatte (16) beabstandet sind.

4. Befestigungssystem (2) nach Anspruch 3, **dadurch gekennzeichnet, dass** der zweite Teil (10) eine dritte Platte (17) umfasst, wobei der zweite Teil (10) und der erste Teil (9) durch einen Verbindungsabschnitt (19) verbunden sind, der der zweiten Platte (13) gegenüber liegt, wobei der Verbindungsabschnitt (19) und der erste Teil (9) an ihrem Stoß einen Wulst (21), der durch Falten des Materials gebildet wird, aufweisen.

5. Befestigungssystem (2) nach Anspruch 4, **dadurch gekennzeichnet, dass** der zweite Teil (10) und der Verbindungsabschnitt (19) an ihrem Stoß eine erste Kurve (22) aufweisen, auf der zwei Bulldozer (23) durch Stanzen des Materials gebildet sind.

6. Befestigungssystem nach einem der vorhergehenden Ansprüche, **dadurch gekennzeichnet, dass** sich der dritte Teil (11) auskragend oberhalb des ersten Teils (9), mit dem er durch eine gewölbte Verbindung (25) verbunden ist, erstreckt.

7. Befestigungssystem (2) nach einem der Ansprüche 3 bis 6, **dadurch gekennzeichnet, dass** der dritte Teil (11) eine vierte Platte (26) und eine fünfte Platte (27) umfasst, die sich jeweils auskragend oberhalb der ersten Platte (12) und der zweiten Platte (13) erstrecken.

8. Befestigungssystem (2) nach einem der vorhergehenden Ansprüche, **dadurch gekennzeichnet, dass** die Schnittfläche (7) eine Befestigungspratze (32) umfasst, die mit dem zweiten Teil (10) durch einen Verbindungsabschnitt (33) verbunden ist, wobei der Verbindungsabschnitt (33) an einem seiner Enden mit dem zweiten Teil (10) durch eine erste Wölbung (34) und an dem anderen seiner Enden mit der Befestigungspratze (32) durch eine zweite Wölbung (35) verbunden ist.

9. Befestigungssystem (2) nach einem der Ansprüche 7 bis 8, **dadurch gekennzeichnet, dass** die vierte Platte (26) und die fünfte Platte (27) voneinander durch einen gewölbten Abschnitt (28) beabstandet sind, wobei sich der gewölbte Abschnitt (28) auskragend auf der gesamten Länge der Stauplatte (16) erstreckt.

10. Kraftfahrzeug (1), das ein Befestigungssystem nach einem der vorhergehenden Ansprüche umfasst.

## Claims

1. A system (2) for fastening bodywork elements (3, 4, 5) to a motor vehicle body (6), this fastening system (2) including an interface (7) present in the form of a one-piece part and secured to the motor vehicle body (6), **characterized in that** this interface (7) includes:
- a first part (9) including fastening means intended to receive a sill mounting (3);
- a second part (10) including fastening means intended to receive a mudguard (5);
- a third part (11) including fastening means intended to receive a front wing (4).

2. The fastening system (2) according to Claim 1, **characterized in that** the first part (9), the second part (10) and the third part (11) each extend in substantially perpendicular planes in pairs.

3. The fastening system (2) according to any one of the preceding claims, **characterized in that** the first part (9) includes a first plate (12) and a second plate (13), these latter being spaced one from the other by a baffle (16).

4. The fastening system (2) according to Claim 3, **characterized in that** the second part (10) includes a third plate (17), the second part (10) and the first part (9) being connected by means of a linking section (19) facing the second plate (13), the linking section (19) and the first part (9) having at their junction a bead (21) formed by bending of the material.

5. The fastening system (2) according to Claim 4, **characterized in that** the second part (10) and the linking section (19) have at their junction a first turn (22) on which two bulldozers (23) are formed by punching of the material.

6. The fastening system (2) according to any one of the preceding claims, **characterized in that** the third part (11) extends overhanging above the first part (9) to which it is connected by means of a curved junction (25).

7. The fastening system (2) according to any one of Claims 3 to 6, **characterized in that** the third part (11) includes a fourth plate (26) and a fifth plate (27) extending respectively overhanging above the first plate (12) and the second plate (13).

8. The fastening system (2) according to any one of the preceding claims, **characterized in that** the interface (7) includes a fastening lug (32) connected to the second part (10) by means of a junction section (33), the junction section (33) being connected at one of its ends to the second part (10) by means of a first curvature (34) and at the other of its ends to the fastening lug (32) by means of a second curvature (35).

9. The fastening system (2) according to any one of Claims 7 to 8, **characterized in that** the fourth plate (26) and the fifth plate (27) are spaced apart from one another by means of a curved section (28), the curved section (28) extending overhanging above the entire length of the baffle (16).

10. A motor vehicle (1) including a fastening system (2) according to any one of the preceding claims.
